# EUROPÄISCHE PATENTSCHRIFT

(11) **EP 1 087 901 B1**
(45) Veröffentlichungstag und Bekanntmachung des Hinweises auf die Patenterteilung: **21.08.2002**
(21) Anmeldenummer: 99938159.3
(22) Anmeldetag: 10.06.1999
(51) Int. Cl.: B65H 26/02

(54) **VERFAHREN ZUR ÜBERWACHUNG EINER MATERIALBAHN**
METHOD FOR MONITORING A STRIP OF FABRIC
PROCEDE DE SURVEILLANCE D'UNE BANDE DE MATERIAU

(30) Priorität: 18.06.1998 DE 19827190
(43) Veröffentlichungstag der Anmeldung: 04.04.2001
(73) Patentinhaber: Koenig & Bauer Aktiengesellschaft, 97080 Würzburg (DE)
(72) Erfinder: OHLHAUSER, Stefan, D-67259 Heuchelheim (DE); POHL, Klaus-Dieter, D-67346 Speyer (DE)
(86) Internationale Anmeldenummer: DE9901698
(87) Internationale Veröffentlichungsnummer: WO99065808

(56) Entgegenhaltungen:
- DE-A- 2 335 294
- DE-A- 4 304 306
- DE-C- 4 039 108
- PATENT ABSTRACTS OF JAPAN vol. 018, no. 472 (M-1667), 2. September 1994 (1994-09-02) & JP 06 155052 A (FUJI ELECTRIC CO LTD), 3. Juni 1994 (1994-06-03)

## Beschreibung

Die Erfindung betrifft ein Verfahren zur Überwachung einer Materialbahn gemäß dem Oberbegriff des Anspruches 1.

Die US 43 44 073 A beschreibt einen Grenzschalter zur Überwachung eines Risses einer Materialbahn. Dieser Grenzschalter ist mit einer Tänzerwalze zusammenwirkend angeordnet. Die Tänzerwalze verändert im Fall eines Risses der Materialbahn ihre Position und betätigt den Grenzschalter.
Eine Messung der Spannung der Materialbahn ist mittels der Tänzerwalze nicht vorgesehen.

Die DE 43 11 774 A1 offenbart eine Sicherheitsvorrichtung für eine Rotationsdruckmaschine Dabei sind Zylinder angeordnet, die im Fall eines Bahnrisses die Materialbahn aufwickeln. Mindestens einem Zylinder ist ein Kraftmeßlager zugeordnet. Dieses Kraftmeßlager ermittelt den Druck infolge der aufgewickelten Materialbahn zwischen zwei Zylindern und nicht die Bahnspannung.

Die DE 43 04 306 A1 beschreibt ein Verfahren zur Steuerung einer an einem Band anliegenden Spannung in einem Bandaufnahmesystem. Hierbei wird eine Ausgabecharakteristik eines Spannungsgerätes zur Steuerung des Drehmoments der Aufnahmerolle verwendet.

Die DE 40 39 108 C1 zeigt eine Vorrichtung zum Verhindern von Druckwerkschäden bei Bahnriß. Zur Messung der Bahnspannung ist an einer Kühlwerkwalze ein Meßwertaufnehmer installiert.

Der Erfindung liegt die Aufgabe zugrunde, ein Verfahren zur Überwachung einer Materialbahn zu schaffen.

Die Aufgabe wird erfindungsgemäß durch die Merkmale des Anspruches 1 gelöst.

Die mit der Erfindung erzielbaren Vorteile bestehen insbesondere darin, daß eine bereits vorhandene, die Bahnspannung ermittelte Meßwalze als Detektor für Bahnrisse verwendet wird. Flattern oder Ändern einer Lage einer Materialbahn führt im Vergleich zu Sensoren, die den Abstand zu der Materialbahn messen nicht zu einer Fehlerkennung. Durch Verwendung einer ortsfesten Meßwalze sind im Vergleich zu Tänzerwalzen sehr kurze Reaktionszeiten möglich, da nahezu keine Massenträgheitsmomente zu überwinden sind.

Die Anordnung der Meßwalze ist weitgehend unabhängig von dem Ort des Bahnrisses, da sich ein Bahnspannungsabfall sehr schnell in der Maschine ausbreitet.

Die Verwendung eines prozentualen Grenzwertes der zulässigen Änderung der Bahnspannung gewährleistet eine von Produktionsbedingungen unabhängige Beurteilung eines Bahnrisses.

Ein Ausführungsbeispiel der Erfindung.ist in der Zeichnung dargestellt und wird im folgenden näher beschrieben.
Es zeigen:

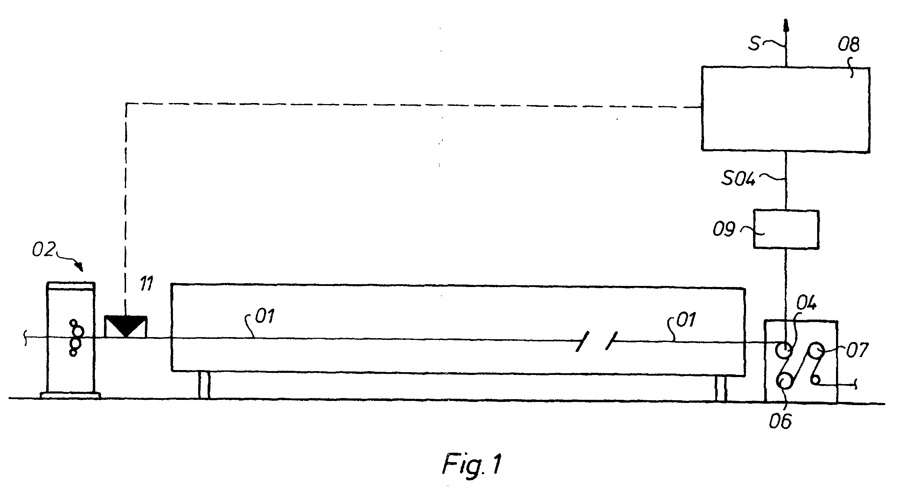

- Fig. 1: eine schematische Seitenansicht einer Rotationsdruckmaschine;

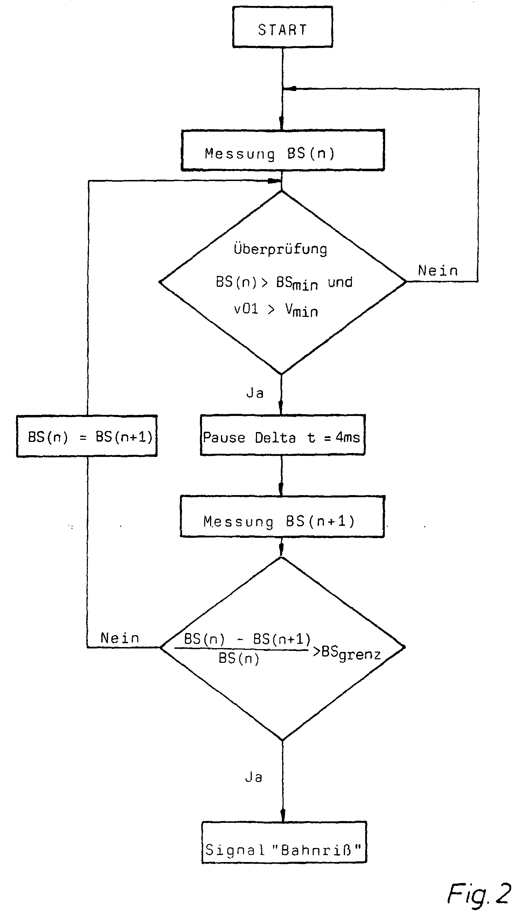

- Fig. 2: ein Ablaufdiagramm eines Verfahrens zur Überwachung einer Materialbahn.

Eine Materialbahn 01 wird in einer Rotationsdruckmaschine nach einem Druckwerk 02 einem Trockner 03 zugeführt und anschließend einer Gruppe von Kühlwalzen 04; 06; 07. Mindestens eine von der Materialbahn 01 zumindest teilweise umschlungene Meßwalze 04, z. B. eine Kühlwalze 04 ist an mindestens einem Zapfen mit einem Kraftmeßlager oder Meßzapfen versehen. Dieses Kraftmeßlager weist beispielsweise Dehnungsmeßstreifen oder Piezoelemente auf. Die Meßwalze 04 ist im wesentlichen ortsfest angeordnet. Mittels dieser Meßwalze 04 wird eine Bahnspannung BS der Materialbahn 01 ermittelt.

Im vorliegenden Beispiel ist die als Kühlwalze 04 ausgebildete Meßwalze 04 die erste Kontaktstelle der Materialbahn 01 nach dem Trockner 03. Anstelle einer als Kühlwalze 04 ausgebildeten Meßwalze 04 kann auch an jeder anderen Stelle entlang der Bahnführung in der Druckmaschine eine oder mehrere die Bahnspannung BS messende Meßwalzen angeordnet sein. Insbesondere kann nach jedem Druckwerk eine die Bahnspannung BS messende Meßwalze angeordnet sein.

Mittels des Kraftmeßlagers der Meßwalze 04 wird ein der Größe der Bahnspannung BS zugeordnetes Signal S04 erzeugt. Dieses Signal S04 wird einer Auswerteeinrichtung 08 zugeführt und dort verarbeitet. Dieses Signal S04 kann einem auf die Eigenfrequenzen der Meßwalze 04 angepaßten Filter 09 zugeführt werden. Somit können Störfrequenzen (z. B. 2 - 20 Hz) ausgefiltert werden.

Bei einem Verfahren zur Überwachung der Bahnspannung BS der Materialbahn 01 wird ein erster Wert BS(n) für die Bahnspannung ermittelt und abgespeichert. Anschließend werden Randbedingungen für mindestens notwendige Bahngeschwindigkeit vₘᵢₙ und mindestens notwendige Bahnspannung BSₘᵢₙ (abhängig von Eigenschwingungen der Meßwalze) überprüft. Sind diese Randbedingungen erfüllt, werden in vorgegebenen Zeitabständen Delta t, z. B. Delta t = 4 ms jeweils Werte BS(n); BS(n+1) der Bahnspannung ermittelt. Diese Werte BS(n) und BS(n+1) werden voneinander subtrahiert. Eine Differenz zweier Werte BS stellt also ein Maß für die Änderung der Bahnspannung pro Zeiteinheit bzw. ein Maß für den Gradienten eines Verlaufes der Bahnspannung dar.
Auch ist es möglich, eine Änderung der Bahnspannung auch aufgrund anderer Verknüpfungen, wie Addition, Multiplikation oder Division festzustellen.

Die Differenz Delta BS = BS(n)-BS(n+1) zweier Werte BS(n), BS(n+1) wird auf den aktuellen (zuletzt gemessenen) Wert BS(n+1) oder den vorher gemessenen Wert BS(n) bezogen, vorzugsweise wird der zuerst festgestellte Wert BS(n) als Bezugswert festgelegt, d. h. es wird eine prozentuale Änderung Delta %BS der Bahnspannung pro Zeiteinheit berechnet Delta %BS = (BS(n)-BS(n+1))/BS(n).
Es ist auch möglich eine prozentuale Änderung beispielsweise durch einfache Quotientenbildung (z. B. Delta %BS = BS(n+1)/BS(n)) festzustellen.
Anstelle der fortlaufenden Änderung des Bezugswertes BS(n) durch gemessene Werte der Bahnspannung ist auch ein "fester", beispielsweise manuell eingegebener Bezugswert möglich. Dieser Bezugswert wird für bestimmte Produktionsbedingungen fest vorgegeben.

Die prozentuale Änderung Delta %BS der Bahnspannung wird mit einem vorgegebenen Grenzwert BS_{grenz} (z. B. 0,5) verglichen und bei Überschreiten des Grenzwertes BS_{grenz} wird ein Signal S ausgegeben. Aufgrund dieses Signals S wird beispielsweise eine Bahnfangeinrichtung betätigt und/oder in den Druckwerken die Zylinder voneinander abgestellt. Ein Überschreiten des vorgegeben Grenzwertes der prozentualen Änderung der Bahnspannung bedeutet, daß ein Bahnriß aufgetreten ist.

Eine vorhandene Vorrichtung zum Messen und/oder Regeln der Bahnspannung wird also zum Erkennen eines Risses der Materialbahn 01 verwendet.

Zusätzlich kann ein weiterer Sensor 11, z. B. optischer zur Erkennung eines Bahnrisses angeordnet sein.
Dieser wird insbesondere bei niedrigen Bahngeschwindigkeiten (z. B. kleiner 20.000 Ex/h) verwendet.

### Bezugszeichenliste

- 01: Materialbahn
- 02: Druckwerk
- 03: Trockner
- 04: Kühlwalze, Meßwalze
- 05: -
- 06: Kühlwalze
- 07: Kühlwalze
- 08: Auswerteeinrichtung
- 09: Filter
- 10: -
- 11: Sensor

- S: Signal
- S04: Signal
- v01: Bahngeschwindigkeit
- BS: Bahnspannung
- BS_{grenz}: Grenzwert der Änderung der Bahnspannung
- Delta BS: Änderung der Bahnspannung
- Delta %BS: prozentuale Änderung der Bahnspannung
- Delta t: Änderung der Zeit

## Patentansprüche

1. Verfahren zur Überwachung einer Materialbahn (01), **dadurch gekennzeichnet, daß** ein Gradient eines Verlaufes einer Bahnspannung (BS) ermittelt wird und aufgrund eines Vergleiches dieses Gradienten mit einem Grenzwert ein Bahnriß detektiert wird.

2. Verfahren nach Anspruch 1, **dadurch gekennzeichnet, daß** eine Funktion gebildet aus dem Gradienten der Bahnspannung (BS) bezogen auf einen Bezugswert (BS(n)) der Bahnspannung ausgewertet wird.

3. Verfahren nach Anspruch 2, **dadurch gekennzeichnet, daß** der Bezugswert (BS(n)) der Bahnspannung (BS) aus einem gemessenen Wert (BS(n)) gebildet wird.

4. Verfahren nach Anspruch 3, **dadurch gekennzeichnet, daß** der Bezugswert (BS(n)) der Bahnspannung (BS) laufend aktualisiert wird.

5. Verfahren nach Anspruch 4, **dadurch gekennzeichnet, daß** der Bezugswert (BS(n)) der Bahnspannung aus dem äktuellen Wert (BS(n+1)) der vorherigen Messung gebildet wird.

6. Verfahren nach Anspruch 2, **dadurch gekennzeichnet, daß** der Bezugswert (BS(n)) für bestimmte Produktionsbedingungen fest vorgegeben ist.

7. Verfahren nach Anspruch 1, **dadurch gekennzeichnet, daß** die Bahnspannung einer Materialbahn (01) mit einer ortsfesten Meßwalze ermittelt wird.

8. Verfahren nach Anspruch 1, **dadurch gekennzeichnet, daß** bei Bahnriß eine Bahnfangeinrichtung betätigt und/oder in Druckwerken Zylinder voneinander abgestellt werden.

9. Verfahren nach Anspruch 1, **dadurch gekennzeichnet, daß** die Bahnspannung, bezogen auf die Transportrichtung der Materialbahn, nach einem Druckwerk (02) gemessen wird.

## Claims

1. Method for monitoring a material web (01), **characterized in that** a gradient of a variation in a web tension (BS) is determined and, on the basis of a comparison of this gradient with a limiting value, a web break is detected.

2. Method according to Claim 1, **characterized in that** a function formed from the gradient of the web tension (BS) based on a reference value (BS(n)) of the web tension is evaluated.

3. Method according to Claim 2, **characterized in that** the reference value (BS(n)) of the web tension (BS) is formed from a measured value (BS(n)).

4. Method according to Claim 3, **characterized in that** the reference value (BS(n)) of the web tension (BS) is updated continuously.

5. Method according to Claim 4, **characterized in that** the reference value (BS(n)) of the web tension is formed from the current value (BS(n+1)) of the previous measurement.

6. Method according to Claim 2, **characterized in that** the reference value (BS(n)) is permanently predefined for specific production conditions.

7. Method according to Claim 1, **characterized in that** the web tension of a material web (01) is determined with a stationary measuring roll.

8. Method according to Claim 1, **characterized in that** in the event of a web break, a web catching device is actuated and/or cylinders are thrown off one another in printing units.

9. Method according to Claim 1, **characterized in that** the web tension, as based on the transport direction of the material web, is measured after a printing unit (02).

## Revendications

1. Procédé de surveillance d'une bande de matériau (01), **caractérisé en ce qu'**un gradient de l'allure d'une tension de bande (BS) est déterminé et une déchirure de bande est détectée d'après une comparaison entre ce gradient et une valeur limite.

2. Procédé selon la revendication 1, **caractérisé en ce qu'**une fonction, formée à partir du gradient de la tension de bande (BS) par rapport à une valeur de référence (BS(n)) de la tension de bande, est soumise à évaluation.

3. Procédé selon la revendication 2, **caractérisé en ce que** la valeur de référence (BS(n)) de la tension de bande (BS) est formée d'après une valeur mesurée ((BS(n)).

4. Procédé selon la revendication 3, **caractérisé en ce que** la valeur de référence (BS(n)) de la tension de bande (BS) est actualisée en continu.

5. Procédé selon la revendication 4, **caractérisé en ce que** la valeur de référence (BS(n)) de la tension de bande est formée partis de la valeur actuelle (BS(n+1)) de la mesure précédente.

6. Procédé selon la revendication 2, **caractérisé en ce que** la valeur de référence (BS(n)) est prédéterminée de façon fixe pour des conditions de production déterminées.

7. Procédé selon la revendication 1, **caractérisé en ce que** la tension d'une bande de matériau (01) est déterminée à l'aide d'un rouleau mesureur localement fixe.

8. Procédé selon la revendication 1, **caractérisé en ce que**, en cas de déchirure de bande, un dispositif de captage de bande est actionné et/ou des cylindres d'impression sont dégagés les uns des autres dans les groupes d'impression.

9. Procédé selon la revendication 1, **caractérisé en ce que** la tension de bande est mesurée en aval d'un groupe d'impression (02), en se référant à la direction de transport de la bande de matériau.
